(19) Europäisches Patentamt
European Patent Office
Office européen des brevets

(11) **EP 4 257 269 A1**

(12) **EUROPEAN PATENT APPLICATION**
published in accordance with Art. 153(4) EPC

(43) Date of publication:
**11.10.2023 Bulletin 2023/41**

(21) Application number: **21900367.0**

(22) Date of filing: **08.11.2021**

(51) International Patent Classification (IPC):
*B22F 9/00* (2006.01)          *B22F 9/24* (2006.01)
*B01J 37/04* (2006.01)          *B01J 37/16* (2006.01)
*B01J 23/52* (2006.01)          *B22F 1/00* (2022.01)
*B22F 1/0545* (2022.01)          *B22F 1/102* (2022.01)
*B22F 1/18* (2022.01)

(52) Cooperative Patent Classification (CPC):
**B01J 23/52; B01J 37/04; B01J 37/16; B22F 1/00;
B22F 1/0545; B22F 1/102; B22F 1/18; B22F 9/00;
B22F 9/24;** Y02E 60/50

(86) International application number:
**PCT/JP2021/041057**

(87) International publication number:
**WO 2022/118612 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 JP 2020200076**

(71) Applicants:
• **Ishifuku Metal Industry Co., Ltd.
Chiyoda-ku,
Tokyo 101-8654 (JP)**

• **The Doshisha
Kyoto 602-8580 (JP)**

(72) Inventors:
• **AOKI, Naoya
Soka-shi, Saitama 340-0002 (JP)**
• **SUGAWARA, Yoko
Soka-shi, Saitama 340-0002 (JP)**
• **INABA, Minoru
Kyotanabe-shi, Kyoto 610-0394 (JP)**
• **DAIMON, Hideo
Kyotanabe-shi, Kyoto 610-0394 (JP)**

(74) Representative: **TBK
Bavariaring 4-6
80336 München (DE)**

(54) **GOLD-SUPPORTED CARBON CATALYST AND METHOD FOR MANUFACTURING SAME**

(57)    Provided is a gold-supported carbon catalyst, which has a smaller size of gold fine particles, and which has strong adhesive strength with carbon black and is capable of suppressing aggregation of gold fine particles. The gold-supported carbon catalyst includes gold fine particles supported on carbon black, wherein the gold fine particles are coordinated by an alkanethiol at a coverage of from 10% to 70%, and wherein the gold fine particles have an average particle diameter of from 1.0 nm to 1.5 nm.

EP 4 257 269 A1

GOLD FINE PARTICLE

CARBON BLACK

20 nm

FIG. 1

**Description**

Technical Field

The present invention relates to a gold-supported carbon catalyst and a method of producing the gold-supported carbon catalyst.

Background Art

Fine particles of gold each having a particle diameter of the nanometer order can be utilized for, for example, a cathode catalyst that reduces carbon dioxide.

As a method of producing such gold fine particles, there is given a gas phase method or a liquid phase method. An example of the liquid phase method is a method involving reducing a gold ion by adding a reducing agent to obtain gold fine particles.

In Patent Literature 1, there is a disclosure of, in a method of producing gold fine particles involving reducing a chloroauric acid ion with sodium borohydride using a toluene/water two-phase system in the presence of an alkanethiol, a method of controlling a particle diameter by controlling a reduction reaction speed.

Citation List

Patent Literature

[PTL 1] JP 2004-232017 A

Summary of Invention

Technical Problem

A catalyst obtained by supporting gold fine particles on carbon black has been required to have a small fine particle size for improvement in activity and to be capable of suppressing aggregation of the gold fine particles for improvement in durability. However, there has been a problem in that, when the gold fine particles are made smaller, the gold fine particles are easily aggregated during use to cause reduction in activity.

An object of the present invention is to provide a gold-supported carbon catalyst, which has a smaller size of gold fine particles, and which has strong adhesive strength with carbon black and is capable of suppressing aggregation of gold fine particles.

Solution to Problem

The inventors of the present invention have found that, when the particle diameter of each of gold fine particles is made smaller by removing comparably large gold fine particles in a gold fine particle treatment step, and that, when gold fine particles coordinated by an alkanethiol are supported on carbon black in hexane, there can be obtained a gold-supported carbon catalyst that enables suppression of aggregation of the gold fine particles owing to strong adhesive strength and an effect of steric hindrance of the coordinated alkanethiol. Thus, the inventors have completed the present invention. That is, it is conceived that, when the gold fine particles are supported on carbon black by the method of the present invention, the supporting can be performed under a condition without water that adversely affects the bonding between a functional group of carbon black and each of the gold fine particles, and bonding (covalent bonding property and ionic bonding property) between the functional group of carbon black and the alkanethiol coordinated to the gold fine particles is added to increase the adhesive strength.

In addition, it is conceived that the alkanethiol coordinated to the gold fine particles performs as a steric hindrance to suppress aggregation of the gold fine particles at the time of use of the catalyst, to thereby suppress deterioration in function of the catalyst and contribute to improvement in durability.

Advantageous Effects of Invention

According to the present invention, the gold-supported carbon catalyst, which has a smaller size of gold fine particles, and which has strong adhesive strength with carbon black and is capable of suppressing aggregation of gold fine particles, can be provided.

Brief Description of Drawings

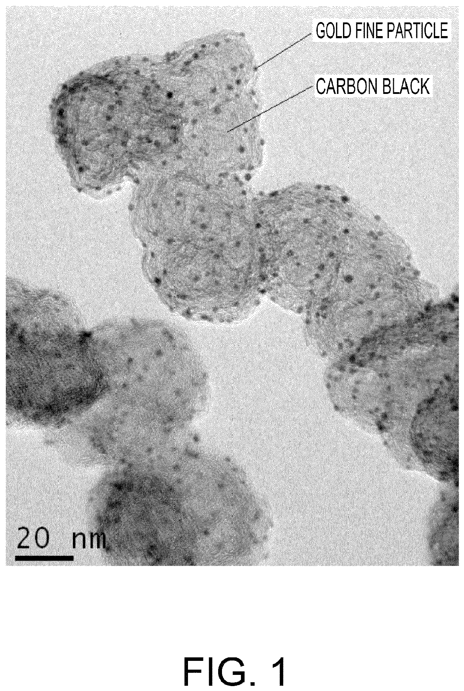

FIG. 1 is a TEM image of Example 1.

Description of Embodiments

The present invention is directed to a gold-supported carbon catalyst including gold fine particles supported on carbon black, wherein the gold fine particles are coordinated by an alkanethiol at a coverage of from 10% to 70%, and wherein the gold fine particles have an average particle diameter of from 1.0 nm to 1.5 nm. The average particle diameter of the gold fine particles is preferably from 1.2 nm to 1.5 nm.

The alkanethiol, which is represented by the general formula $C_nH_{(2n+1)}SH$, is a water-insoluble thiol including a bonding group containing a sulfur atom that is bonded to a gold surface, a spacer chain of a methylene group, and a head group of a methyl group. Examples thereof include dodecanethiol, hexadecanethiol, and octadecanethiol.

The gold fine particles are supported on a surface of carbon black in a highly dispersed state. Carbon black has electroconductivity, and its BET specific surface area is from 80 $m^2/g$ to 1,300 $m^2/g$. In general, a surface functional group, such as a carboxyl group, a lactone group, a phenolic hydroxy group, or a carbonyl group, is present on the surface of carbon black. As the carbon black, for example, Ketjen Black EC300J having a BET specific surface area of about 800 $m^2/g$ or Ketjen Black EC600JD having a BET specific surface area of about 1,270 $m^2/g$ may be used.

A method of producing the gold-supported carbon catalyst of the present invention includes a gold fine particle formation step, a gold fine particle treatment step, and a gold fine particle supporting step.

In the gold fine particle formation step, a chloroauric acid aqueous solution is mixed with an organic solvent solution containing a phase transfer agent to obtain a liquid mixture. Then, an organic solvent solution phase is separated from the liquid mixture. Subsequently, an alkanethiol is mixed into the separated organic solvent solution phase to obtain a mixed solution. Next, an aqueous solution containing a reducing agent is mixed into the mixed solution, to thereby provide gold fine particles coordinated by the alkanethiol. Hereinafter, gold fine particles coordinated by an alkanethiol are referred to as alkanethiol-coordinated gold fine particles.

Specifically, for example, an aqueous solution obtained by dissolving chloroauric acid in pure water and a solution obtained by dissolving tetraoctylammonium bromide in toluene serving as an organic solvent are mixed with each other to subject chloroauric acid to a reaction with tetraoctylammonium bromide serving as a phase transfer agent. Then, an aqueous solution phase is removed from the liquid mixture to obtain toluene solution phase (organic solvent solution phase). Next, dodecanethiol is added to the obtained toluene solution phase (organic solvent solution phase), followed by stirring to mix the resultant to provide a gold complex salt $(C_8H_{17})_4N[Au(C_{12}H_{25}S)_4]$ in which a complex coordinated to a gold atom is substituted by a dodecanethiol group $(C_{12}H_{25}S)$. In the above-mentioned procedure, the stirring is performed, for example, at 30°C for 6 hours or more, preferably 12 hours or more.

Subsequently, the mixture obtained by adding the dodecanethiol to the toluene solution phase (organic solvent solution phase) and mixing them is further mixed with sodium borohydride dissolved in pure water, followed by stirring at from 30°C to 60°C for from 1 hour to 4 hours to precipitate gold fine particles coordinated by the dodecanethiol in the toluene solution phase (organic solvent solution phase) through reduction. The toluene solution phase (organic solvent solution phase) is separated, and toluene serving as the organic solvent is removed with an evaporator. Thus, the gold fine particles coordinated by the dodecanethiol are provided as a precipitate. Hereinafter, gold fine particles coordinated by dodecanethiol are referred to as dodecanethiol-coordinated gold fine particles.

In the gold fine particle treatment step, a series of operations involving dispersing the alkanethiol-coordinated gold fine particles in hexane, adding a polar organic solvent to the dispersion and mixing the resultant to obtain a mixture, and centrifuging the mixture to separate the alkanethiol-coordinated gold fine particles is repeated multiple times.

For example, methanol or ethanol may be used as the polar organic solvent.

Specifically, for example, the dodecanethiol-coordinated gold fine particles are dispersed in hexane.

Next, ethanol serving as the polar organic solvent is added, which is then thoroughly mixed. The mixture is subsequently centrifuged by a centrifugation method. The precipitated gold fine particles, coordinated by the dodecanethiol, are extracted and washed.

The series of operations is repeated two or more times (multiple times).

In the above-mentioned step, removal (washing) of unreacted tetraoctylammonium bromide or dodecanethiol adhering to the dodecanethiol-coordinated gold fine particles is performed.

In the gold fine particle treatment step, the gold fine particles coordinated by the dodecanethiol at a coverage of from 10% to 70% and having an average particle diameter of from 1.0 nm to 1.5 nm are provided.

In the gold fine particle treatment step, the comparably large-sized gold fine particles each have a small coordination number of dodecanethiol per a unit surface area of the gold fine particles, and the polarity thereof increases relatively. Those fine particles bond to ethanol, which serves as the polar organic solvent, and remain in the liquid without precipitating. Accordingly, it is conceived that comparably large-sized gold fine particles can be removed.

In the gold fine particle supporting step, a solution is prepared by dispersing the alkanethiol-coordinated gold fine particles, obtained through the gold fine particle treatment step, in hexane. Further, another solution is prepared by dispersing carbon black in hexane. The prepared solutions are then mixed with each other and stirred for 6 hours or more to produce carbon black supporting the alkanethiol-coordinated gold fine particles.

Specifically, for example, the dodecanethiol-coordinated gold fine particles are irradiated with an ultrasonic wave in hexane to be dispersed. Thus, a gold colloid hexane solution is obtained. Carbon black is irradiated with an ultrasonic wave in a hexane solution to be dispersed. In the above-mentioned step, for example, the dispersion is performed by irradiation with an ultrasonic wave at from 33 kHz to 40 kHz for 1 hour each.

The two solutions are mixed with each other, followed by stirring at room temperature for, for example, 12 hours, to thereby cause the dodecanethiol-coordinated gold fine particles to be supported on carbon black. The gold fine particles are supported on the carbon black by the stirring. At the time of the mixing of the two solutions, the mixture may be irradiated with an ultrasonic wave for from 10 minutes to 30 minutes.

Through the above-mentioned steps, the gold-supported carbon catalyst with gold fine particles supported on the carbon black, wherein the gold fine particles are coordinated by an alkanethiol at a coverage of from 10% to 70%, and wherein the gold fine particles have an average particle diameter of from 1.0 nm to 1.5 nm, can be produced. A gold-supported carbon having a gold loading of from 5 wt.% to 70 wt.% can be produced by adjusting a carbon amount with respect to a gold amount.

A trace amount of water to be absorbed in carbon black at the time of handling is removed when the carbon black is irradiated with an ultrasonic wave in hexane.

When the coverage of the alkanethiol is less than 10%, adhesive strength of the gold fine particles with carbon black is reduced. Meanwhile, when the coverage of the alkanethiol is more than 70%, a gold surface functioning as a catalyst is not sufficiently obtained. The coverage of the alkanethiol is preferably from 10% to 70%, more preferably from 15% to 65%.

Examples

The present invention is described more specifically below by way of Examples.

(Example 1)

A chloroauric acid aqueous solution was prepared by dissolving 21 g of chloroauric acid ($HA_uCl_4 \cdot 4H_2O$) in 10 g of pure water, and a solution was prepared by dissolving 42.9 g of tetraoctylammonium bromide (phase transfer agent) in 693 g of toluene. The prepared solutions were mixed with each other, followed by stirring at room temperature.

Next, an aqueous solution phase was removed to obtain a toluene solution phase.

31.2 mL of dodecanethiol (a protective agent) was added to the obtained toluene solution phase, and the mixture was stirred for 12 hours.

After that, a sodium borohydride aqueous solution was prepared by mixing 20 g of sodium borohydride (a reducing agent) and 255 g of ultrapure water. The sodium borohydride aqueous solution was added to the toluene solution phase held at 60°C at a dropping rate of 10 mL/min. The mixture was stirred for 30 minutes and was then further stirred at 25°C for 3 hours.

After that, the aqueous solution phase was removed, and a precipitate was obtained by evaporating toluene with a rotary evaporator.

Next, a gold fine particle treatment step was performed. This step involved removing excessive amounts of tetraoctylammonium bromide and dodecanethiol from the gold-containing precipitate, as well as removing comparatively large gold fine particles. As the first treatment thereof, the precipitate (=gold colloid) was irradiated with an ultrasonic wave at 40 kHz for 10 minutes to be redispersed in 60 mL of hexane. Then, 500 mL of ethanol was added thereto, and the resultant was mixed. Next, centrifugation was performed at 8,000 rpm and 10°C for 15 minutes to obtain a precipitate.

As the second treatment, the precipitate was irradiated with an ultrasonic wave at 40 kHz for 10 minutes to be dispersed again in 24 mL of hexane. 500 mL of ethanol was added thereto, and the resultant was mixed. Next, centrifugation was performed at 8,000 rpm and 10°C for 15 minutes. After that, a supernatant was removed, and the precipitate was dispersed again in hexane. The hexane solution was evaporated with a rotary evaporator to obtain a precipitate (dodecanethiol-coordinated gold fine particles).

The obtained dodecanethiol-coordinated gold fine particles were irradiated with an ultrasonic wave at 40 kHz for 30 minutes to be dispersed in 100 mL of hexane. Thus, a gold colloid hexane solution was obtained.

Next, a solution was prepared by dispersing 90 g of carbon black (EC300J) in 6 L of a hexane solution and irradiating the resultant with an ultrasonic wave at 40 kHz for 1 hour. The resultant solution was then mixed with the gold colloid hexane solution. The mixture was irradiated with an ultrasonic wave at 40 kHz for 30 minutes, followed by stirring at room temperature for 12 hours. Thus, the dodecanethiol-coordinated gold fine particles were supported on carbon black.

The solution was filtered with a glass filter and was dried at 60°C to obtain a gold-supported carbon catalyst of Example 1 having a gold loading of 10.8 wt.%.

The average particle diameter of the gold fine particles of the obtained gold-supported carbon catalyst was 1.4 nm, and a standard deviation thereof was 0.60. A gold particle surface coverage of the coordinated dodecanethiol was 17%.

(Determination of Average Fine Particle Diameter of Gold)

The particle diameters of the gold fine particles were measured using a photograph taken by TEM observation (acceleration voltage: 200 kV, magnification: 1,000,000). Thus, an average particle diameter and a standard deviation were calculated.

(Determination of Gold Particle Surface Coverage of Alkanethiol)

The number (A) of gold fine particles having an average particle diameter and the number (B) of alkanethiol molecules coordinated to the gold fine particles, per 1 g of the gold-supported carbon catalyst, were each determined from the following formulae. Thus, the number (C=B/A) of molecules of the alkanethiol per gold fine particle was then calculated. A gold particle surface coverage (D) of the alkanethiol was calculated from the formula 3 using the value (C).

$$\text{Formula 1} \quad A = (\text{gold loading per 1 g of catalyst}) \div \{(\text{volume of one gold particle having average particle diameter}) \div (\text{volume of one gold atom}) \times 197 \div (6.02 \times 10^{23})\}$$

$$\text{Formula 2} \quad B = X \div (\text{mass of 1 mol of alkanethiol}) \times 6.02 \times 10^{23}$$

$$X: \text{mass reduction amount of 1 g of gold-supported carbon catalyst before and after heat treatment at } 300°C$$

$$\text{Formula 3} \quad D = \pi(\text{atomic radius of sulfur})^2 \times C \div (\text{surface area of one gold particle having average particle diameter}) \times 100$$

(Example 2)

A gold-supported carbon catalyst of Example 2 was obtained by the same production method as that of Example 1 except that 31.2 mL of dodecanethiol of Example 1 was changed to 39.4 mL of hexadecanethiol. A gold loading of the obtained gold-supported carbon catalyst was 10.5 wt.%, an average particle diameter of the gold fine particles was 1.4 nm, and a standard deviation thereof was 0.55. A gold particle surface coverage of the coordinated hexadecanethiol was 58%.

(Comparative Example 1)

In Comparative Example 1, the gold fine particles were supported on carbon black by the same method as that of Example 1 except that the gold fine particle treatment step was not performed. Thus, a gold-supported carbon catalyst having a gold loading of 7.6 wt.% was obtained.

(Comparative Example 2)

In Comparative Example 2, hexadecanethiol was evaporated from the gold-supported carbon catalyst obtained in Example 2 by heat treatment at 200°C for 1 hour. Thus, a gold-supported carbon catalyst having an average particle diameter of 1.6 nm was obtained.

The characteristics of the catalysts of Examples 1 and 2 and Comparative Example 1 are shown in Table 1. In addition, a TEM image of Example 1 is shown in FIG. 1. It is found by the TEM image that a catalyst in which the gold fine particles each having a particle diameter of from 1.0 nm to 1.5 nm were uniformly dispersed on carbon black without being aggregated was obtained.

When the gold particle surface coverage of the alkanethiol of Comparative Example 1 of Table 1 was determined by the formula 3, a value of 100% or more was obtained, but this value was expressed as 100%. This is presumably because the lack of the gold fine particle treatment step caused an excess alkanethiol to entangle with the alkanethiol coordinated to the gold fine particle surface.

Table 1

| | Average particle diameter of gold fine particles (nm) | Standard deviation of gold fine particle diameter | Gold particle surface coverage of alkanethiol (%) | Gold loading (wt.%) |
|---|---|---|---|---|
| Example 1 | 1.4 | 0.60 | 17 | 10.8 |
| Example 2 | 1.4 | 0.55 | 58 | 10.5 |
| Comparative Example 1 | 2.2 | 0.77 | 100 | 7.6 |

(Adhesive Strength Evaluation)

The adhesive strength between the gold fine particles and the carbon black support in the gold-supported carbon catalyst was evaluated. The evaluation of the adhesive strength was performed by subjecting the gold-supported carbon catalyst in hexane to ultrasonic irradiation at 40 kHz for 30 minutes. The gold loadings before and after the irradiation were then compared. The gold-supported carbon catalyst was recovered by filtration through a glass filter after the ultrasonic treatment.

The gold loading of each sample was determined from a mass analysis value of gold and a mass of the gold-supported carbon catalyst.

Table 2

| Sample | Gold loading (wt.%) | |
|---|---|---|
| | Before ultrasonic wave test | After ultrasonic wave test |
| Example 1 | 10.8 | 10.8 |
| Comparative Example 1 | 7.6 | 6.7 |

In Example 1, no change in the gold loading was recognized before and after the ultrasonic wave test, and hence it was found that the adhesive strength between the dodecanethiol-coordinated gold fine particles and the carbon black support was strong. Meanwhile, in Comparative Example 1, the gold loading was reduced after the ultrasonic wave test, and hence it was found that the adhesive strength was insufficient. This is presumably because unreacted tetraoctylammonium bromide or dodecanethiol adhering to the dodecanethiol-coordinated gold fine particles adversely affects the bonding between a functional group of carbon black and the alkanethiol coordinated to the gold fine particles.

In addition, the gold loading before the ultrasonic wave test in Example 1 where the gold fine particle treatment step was performed was higher as compared to that in Comparative Example 1 where the gold fine particle treatment step was not performed, and hence it is conceived that a supporting speed at which the gold fine particles are supported on carbon increases by performing the gold fine particle treatment step.

(Aggregation Acceleration Test)

Example 1 and Comparative Example 2 were evaluated on aggregation of the gold fine particles, which proceeded during use of the gold-supported carbon catalyst, by an acceleration test of heating at 300°C for 1 hour. The results are shown in Table 3.

In Comparative Example 2, the aggregation of the gold fine particles proceeded, and an average particle diameter after the acceleration test was largely increased to 5.2 nm. In contrast, in Example 1 where dodecanethiol was coordinated, the average particle diameter was 2.8 nm. That is, it is found that the aggregation of the gold fine particles was suppressed.

Table 3

| Sample | Average particle diameter of gold fine particles (nm) | | Change ratio of average particle diameter {(After acceleration test)/ (before acceleration test)} |
|---|---|---|---|
| | Before acceleration test | After acceleration test | |
| Example 1 | 1.4 | 2.8 | 2.0 |
| Comparative Example 1 | 1.6 | 5.2 | 3.3 |

**Claims**

1.  A gold-supported carbon catalyst, comprising:

carbon black; and
gold fine particles supported on the carbon black,
wherein the gold fine particles are coordinated by an alkanethiol at a coverage of from 10% to 70%, and
wherein the gold fine particles have an average particle diameter of from 1.0 nm to 1.5 nm.

2. The gold-supported carbon catalyst according to claim 1, wherein the alkanethiol is dodecanethiol or hexadecanethiol.

3. A method of producing the gold-supported carbon catalyst of claim 1 or 2, the method comprising:

a gold fine particle formation step, which includes:

mixing a chloroauric acid aqueous solution and an organic solvent solution containing a phase transfer agent to obtain a liquid mixture,
separating an organic solvent solution phase from the liquid mixture,
mixing an alkanethiol into the organic solvent solution phase to obtain a mixed solution, and
mixing an aqueous solution containing a reducing agent into the mixed solution to provide gold fine particles coordinated by the alkanethiol;

a gold fine particle treatment step that repeats a series of operations two or more times, including:

dispersing the gold fine particles coordinated by the alkanethiol in hexane,
adding a polar organic solvent thereto and mixing the resultant to obtain a mixture, and
centrifuging the mixture to obtain the gold fine particles coordinated by the alkanethiol; and

a gold fine particle supporting step, which includes:

dispersing the gold fine particles, coordinated by the alkanethiol and obtained through the gold fine particle treatment step, in hexane to prepare a solution,
dispersing carbon black in hexane to prepare another solution, and
mixing the prepared solutions to cause the gold fine particles coordinated by the alkanethiol to be supported on the carbon black.

FIG. 1

## INTERNATIONAL SEARCH REPORT

International application No.

**PCT/JP2021/041057**

### A. CLASSIFICATION OF SUBJECT MATTER

*B22F 9/00*(2006.01)i; *B22F 9/24*(2006.01)i; *B01J 37/04*(2006.01)i; *B01J 37/16*(2006.01)i; *B01J 23/52*(2006.01)i;
*B22F 1/00*(2022.01)i; *B22F 1/0545*(2022.01)i; *B22F 1/102*(2022.01)i; *B22F 1/18*(2022.01)i
FI:  B01J23/52 M; B01J37/04 102; B01J37/16; B22F1/00 K; B22F1/0545; B22F1/102; B22F1/18; B22F9/00 B; B22F9/24 F

According to International Patent Classification (IPC) or to both national classification and IPC

### B. FIELDS SEARCHED

Minimum documentation searched (classification system followed by classification symbols)

B01J21/00-38/74; B22F1/00-1/18; B22F9/00-9/30; B82Y30/00; B82Y40/00; H01M4/86-4/98

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0114870 A (INDUSTRY-ACADEMIC COOPERATION FOUNDATION, YONSEI UNIVERSITY) 16 October 2017 (2017-10-16) claims, examples, paragraphs [0046], [0047], [0054], fig. 1 | 1 |
| A | | 2-3 |
| A | US 2015/0167187 A1 (KAUFFMAN, D.) 18 June 2015 (2015-06-18) fig. 1(b), (c), paragraphs [0030], [0033], [0037], [0040] | 1-3 |
| A | KAUFFMAN, D. R., Chemical Science, 16 May 2014, vol.v5, pp. 3151-3157, <DOI:10.1039/ C4SC00997E> fig. 1(b), p. 3151, right column, paragraph 2, p. 3152 right column, paragraph 1, p. S3, paragraph 1 of supporting Information, fig. S6(c) | 1-3 |
| A | YOSKAMTORN, T. et al., ACS Catalysis, 18 September 2014, vol. 4, pp. 3696-3700, <DOI:10.1021/cs501010x> fig. 1, p. 3697, left column, paragraph 3 | 1-3 |

☑ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/041057**

### C.    DOCUMENTS CONSIDERED TO BE RELEVANT

| Category* | Citation of document, with indication, where appropriate, of the relevant passages | Relevant to claim No. |
|---|---|---|
| A | WO 2011/074606 A1 (OSAKA PREFECTURE UNIVERSITY PUBLIC CORPORATION) 23 June 2011 (2011-06-23)<br>entire text, all drawings | 1-3 |
| A | JP 2013-089287 A (DOSHISHA) 13 May 2013 (2013-05-13)<br>entire text, all drawings | 1-3 |
| A | WO 2005/120708 A1 (JAPAN ADVANCED INSTITUTE OF SCIENCE & TECHNOLOGY) 22 December 2005 (2005-12-22)<br>entire text, all drawings | 1-3 |
| A | JP 2004-232017 A (MITSUBOSHI BELTING LTD.) 19 August 2004 (2004-08-19)<br>entire text, all drawings | 1-3 |

Form PCT/ISA/210 (second sheet) (January 2015)

<div align="center">

**INTERNATIONAL SEARCH REPORT**
**Information on patent family members**

</div>

International application No.

**PCT/JP2021/041057**

| Patent document cited in search report | | | Publication date (day/month/year) | Patent family member(s) | Publication date (day/month/year) |
|---|---|---|---|---|---|
| KR | 10-2017-0114870 | A | 16 October 2017 | (Family: none) | |
| US | 2015/0167187 | A1 | 18 June 2015 | (Family: none) | |
| WO | 2011/074606 | A1 | 23 June 2011 | (Family: none) | |
| JP | 2013-089287 | A | 13 May 2013 | (Family: none) | |
| WO | 2005/120708 | A1 | 22 December 2005 | US 2008/0200329 A1<br>entire text, all drawings<br>EP 1772190 A1<br>CA 2569521 A<br>KR 10-2007-0028528 A<br>CN 1964786 A | |
| JP | 2004-232017 | A | 19 August 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004232017 A